# EUROPÄISCHE PATENTSCHRIFT

(11) **EP 3 958 717 B1**
(45) Veröffentlichungstag und Bekanntmachung des Hinweises auf die Patenterteilung: **23.11.2022**
(21) Anmeldenummer: 20726672.7
(22) Anmeldetag: 24.04.2020
(51) Int. Cl.: A47J 42/02, A47J 42/04, A47J 42/10, A47J 42/38

(54) **MAHLWERK MIT BLOCKIERELEMENT**
GRINDER HAVING BLOCKING ELEMENT
BROYEUR POURVU D'UN ÉLÉMENT DE BLOCAGE

(30) Priorität: 26.04.2019 AT 503842019
(43) Veröffentlichungstag der Anmeldung: 02.03.2022
(73) Patentinhaber: Joma Kunststofftechnik GmbH, 2345 Brunn am Gebirge (AT)
(72) Erfinder: FRIES, Rudolf, 2572 Kaumberg (AT)
(74) Vertreter: SONN Patentanwälte OG
(86) Internationale Anmeldenummer: PCT/AT2020/060166
(87) Internationale Veröffentlichungsnummer: WO 2020/215114

(56) Entgegenhaltungen:
- DE-A1- 2 747 059
- DE-A1- 10 307 930
- DE-B4- 10 307 930
- JP-A- 2013 014 342

## Beschreibung

Die Erfindung betrifft ein Mahlwerk für eine Gewürzmühle, insbesondere eine handbetriebene Gewürzmühle, mit einer Eingangsseite für den Eintritt von ungemahlenem Mahlgut und einer Ausgangsseite für den Austritt von gemahlenem Mahlgut, aufweisend:
- einen Rotor,
- einen mit dem Rotor zusammenwirkenden Stator und
- ein den Rotor und/oder den Stator zumindest teilweise umgebendes Gehäuse, wobei das Gehäuse ein Statorgehäuseteil, welches mit dem Stator im Wesentlichen drehfest verbunden ist, und ein gegenüber dem Statorgehäuseteil verdrehbares Rotorgehäuseteil, welches über ein Verbindungselement mit dem Rotor im Wesentlichen drehfest verbunden ist, aufweist, wobei das Verbindungselement zumindest teilweise in einer Ausnehmung des Rotors aufgenommen ist.

Des Weiteren betrifft die Erfindung eine Gewürzmühle mit einem Aufnahmeraum für Gewürze, insbesondere einem Aufnahmebehälter.

Um Plastikabrieb zu vermeiden, werden bei Gewürzmühlen vermehrt Mahlwerke aus Keramik eingesetzt. Keramikmahlwerke besitzen jedoch den Nachteil, dass ihre Bauteile größeren Fertigungsschwankungen unterliegen als dies bei reinen Kunststoffmahlwerken der Fall ist. Diese Fertigungsschwankungen können nicht nur das Zusammensetzen des Mahlwerks erschweren, sondern später bei Verwendung auch dazu führen, dass sich der Rotor von der Rotorhalterung löst und in Richtung Eingangsseite verschiebt, sodass in weiterer Folge der Mahlspalt zwischen Rotor und Stator verengt wird und das Mahlwerk im ungünstigsten Fall nicht oder nur mehr eingeschränkt nutzbar ist. Es wäre daher wünschenswert, ein Mahlwerk zu schaffen, welches trotz Fertigungsschwankungen leicht zusammensetzbar und auch im Falle eines ungewollten Lösens des Rotors von der Rotorhalterung weiterhin verwendet werden kann.

Ein Mahlwerk aus Keramik ist unter anderem aus der Patentanmeldung DE 10 2016 106 597 A1 bekannt. Diese offenbart eine Gewürzmühle, bei der ein Mahlkonus (Rotor) mit einem Durchgangsloch auf sich in Richtung eines Mahlgutbehälters erstreckende Zentrier- und Rastlaschen aufgeklippst wird, sodass eine formschlüssige Verbindung zwischen einer Mahlwerkskappe und dem Mahlkonus entsteht. Nachteilig ist jedoch, zur Kompensation von Fertigungsschwankungen die Zentrier- und Rastlaschen an ihren Enden relativ breit ausgeführt werden müssen, um Rotoren mit zu breiten Durchgangslöchern zu halten. Dies führt wiederum dazu, dass bei Rotoren mit engen Durchgangsöffnungen die Zentrier- und Rastlaschen nicht oder nur schwer durchgeführt werden können.

Aus der JP 2013014342 A ist weiters eine Gewürzmühle bekannt, welche ein Verbindungselement zwischen einer Ausnehmung des Rotors und dem Rotorgehäuseteil aufweist, wobei dieses Verbindungselement den Rotor in seiner vertikalen Position hält. Das Verbindungselement wird mittels eines Fixierelements über eine Schraubverbindung von der Oberseite her fixiert.

Die JP 2906335 B2 und die JP 2943103 B2 zeigen jeweils eine Gewürzmühle, in welcher ein Blockierelement durch Verbindungsstege mit dem Statorgehäuse verbunden ist. Auf der Unterseite ist ein Verbindungssteg mit einer Ausnehmung vorgesehen. Mit Hilfe dieses Steges des Rotorgehäuses wird der Rotor in einem Anlagebereich gehalten. Der Rotor weist eine Ausnehmung auf, in welche ein Metallstift über das Blockierelement eingesetzt ist, wobei der Metallstift auf der Unterseite in einer Ausnehmung des Verbindungsstegs aufgenommen ist.

Aus der EP 2 596 730 A1 ist eine Gewürzmühle bekannt, bei welcher der Rotor verschieblich auf einem Verbindungselement gelagert ist und mit Hilfe eines Verstell- bzw. Hebeelements gegen die Kraft einer Feder verschoben werden kann.

Die EP 1 459 665 A1 und die US 2002/117566 A1 zeigen ebenfalls Gewürzmühlen mit einem Drehzapfen, auf welchem ein Rotor mit Hilfe einer Feder nach unten gedrückt wird, wobei ein verstellbarer Hebesitz vorgesehen ist, mit welchem der Rotor gegen die Kraft der Feder auf dem Drehzapfennach oben bewegt werden kann.

Die DE 27 47 059 A1 offenbart eine verstellbare Gewürzmühle mit einem Behälter, einem Antriebsteil, einem Mahlring, einem Mahlkegel und einer Antriebsstange. Die Antriebsstange ist mit dem Mahlkegel verbunden und in ein Sackloch des Mahlkegels eingeführt. Des Weiteren ist ein Gleitlager vorgesehen, welches die Antriebsstange zentriert und lagert.

Die DE 103 07 930 A1 offenbart eine verstellbare Handmühle mit einem inneren Reibwerk, einem äußeren Reibwerk und einer Spindel, welche drehfest mit dem inneren Reibwerk verbunden ist. Das innere Reibwerk liegt mit einer unteren Seite an einer oberen Seite einer Einstellschraube an und wird durch eine an der Spindel gehaltene Feder gegen die Einstellschraube gedrückt. Zwischen der Spindel und dem inneren Reibwerk liegt ein Formschluss vor.

Es ist daher Aufgabe der vorliegenden Erfindung, die Nachteile des Standes der Technik zu lindern oder gänzlich zu beseitigen. Insbesondere ist es Aufgabe der Erfindung, ein Mahlwerk zur Verfügung zu stellen, welches unempfindlich gegenüber Fertigungsschwankungen in den Abmessungen der Bauteile, insbesondere des Rotors, ist und deshalb auch im Falle einer etwaigen Verschiebung des Rotors weiterhin funktionsfähig bleibt.

Gelöst wird diese Aufgabe durch ein Mahlwerk der eingangs erwähnten Art mit den Merkmalen des Anspruch 1. Das erfindungsgemäße Mahlwerk zeichnet sich somit dadurch aus, dass das Verbindungselement und der Rotor reibschlüssig verbunden sind und im Fall von Fertigungsschwankungen der Rotor vom Verbindungselement lösbar und in Richtung der Eingangsseite verschiebbar ist, wobei das Gehäuse an einer der Eingangsseite zugewandten Seite des Rotors ein Blockierelement aufweist, welches eine Verschiebung des Rotors in Richtung der Eingangsseite blockiert.

Vorteilhafterweise wird durch das erfindungsgemäße Blockierelement im Falle einer Verschiebung des Rotors von seiner ursprünglichen Position ein zu tiefes Eindringen des Rotors in den Stator verhindert, sodass das Mahlwerk trotz dieser Verschiebung weiterhin funktionsfähig bleibt. Darüber hinaus können nun auch Rotoren verwendet werden, die auf Grund von Fertigungsschwankungen nicht exakt mit den Abmessungen der Rotorhalterung des Gehäuses übereinstimmen und daher auf Grund der Gefahr des sofortigen Lösens von der Rotorhalterung aussortiert hätten werden müssen. Durch das erfindungsgemäße Blockierelement wird quasi eine Grenze festgelegt, bis zu welcher der Rotor in den Stator verschoben bzw. eindringen kann, ohne die Funktion des Mahlwerks zu beeinträchtigen. Das Blockierelement ist vorteilhafterweise demnach derart ausgebildet, dass es den Rotor in Abstand vom Stator hält. Insbesondere bei der Kombination von Keramikrotoren und Keramikstatoren, aber auch Rotoren/Statoren aus Metall mit Kunststoffgehäusen ergibt sich daraus der Vorteil, dass das Blockierelement im Gehäuse relativ exakt platziert werden kann, da Kunststoffgehäuse üblicherweise in einem Spritzgussverfahren hergestellt werden und somit im Vergleich zu keramischen/metallischen Bauteilen geringen Fertigungsschwankungen unterliegen. Das Blockierelement kann auch derart ausgelegt sein, dass es den Rotor mittels Berührungskontakt zwingend in der originären Position hält. Mit anderen Worten bedeutet dies, dass das Blockierelement entweder einen geringen Abstand vom Rotor in seiner originären Position auf der Rotorhalterung haben kann oder jedoch sogleich ein Berührungskontakt zwischen Rotor und Blockierelement vorhanden sein kann.

Das Blockierelement besteht vorzugsweise aus demselben Material wie das Gehäuse und kann zweckmäßigerweise einstückig mit diesem ausgebildet sein. Wie schon erwähnt kann im zusammengesetzten Zustand des Mahlwerks ein geringer Abstand bzw. ein Spiel zwischen dem Blockierelement und dem Rotor vorhanden sein, sodass der Rotor nicht oder zumindest nicht dauerhaft in Kontakt mit dem Blockierelement ist. Dies ist beispielsweise dann der Fall, wenn die Abmessungen des Rotors exakt mit den Abmessungen der Rotorhalterung übereinstimmen und daher keine Verschiebung des Rotors stattfindet. Die Größe des Spiels hängt von den Fertigungsschwankungen und einer etwaigen bereits erfolgten Verschiebung ab. Vorzugsweise beträgt das Spiel zwischen Rotor und Blockierelement jedoch weniger als 2 mm, insbesondere weniger als 1 mm, besonders bevorzugt weniger als 0,5 mm. Wenn kein Spiel vorhanden ist (beispielsweise, wenn sich der Rotor von der Rotorhalterung gelöst und sich in Richtung der Eingangsseite verschoben hat), liegt die der Eingangsseite zugewandten Seite des Rotors am Blockierelement an. Eine Rotation ist in diesem Fall aber weiterhin möglich.

Der Rotor des Mahlwerks ist bevorzugt kegelstumpfförmig ausgebildet und innerhalb des Stators angeordnet. Zwischen dem Stator und dem Rotor befindet sich ein umlaufender Mahlspalt, welcher sich vorzugsweise von der Eingangsseite zur Ausgangsseite hin verengt. An seiner Mantelfläche weist der Rotor eine Vielzahl von Mahlvorsprüngen auf, die mit Mahlvorsprüngen des Stators zusammenwirken und durch Rotation das Mahlgut, welches an der Eingangsseite in das Mahlwerk gelangt, vermahlen. Die Mahlvorsprünge des Stators und des Rotors können jeweils durch Zähne gebildet sein, die spitze Kanten, Ecken und/oder spitzwinkelige Hinterschneidungen ausbilden. Durch die Zähne kann das Mahlgut zerschnitten werden, was sich vorteilhaft auf die Erhaltung von Aromen im Mahlgut auswirkt. Alternativ können die Mahlvorsprünge frei von spitzen Kanten, Ecken und/oder spitzwinkeligen Hinterschneidungen sein und einen Krümmungsradius von mindestens 0,1 mm aufweisen. Bei dieser Ausführungsform der Mahlvorsprünge wird das Mahlgut zerdrückt, was den Abrieb des Mahlwerks weiter reduziert.

Neben dem Stator und dem Rotor, welche bevorzugt jeweils aus keramischem oder metallischem Material, insbesondere ein Keramikmaterial mit hohem Alumina-Anteil, welcher bevorzugt mindestens 85 % beträgt, bestehen, weist das Mahlwerk ein Gehäuse auf, welches den Stator und/oder den Rotor zumindest teilweise umgibt. Das Gehäuse besteht bevorzugt aus thermoplastischem Kunststoff. Dieser kann sowohl teilkristallin als auch amorph aufgebaut sein. Das Gehäuse kann eine Aufnahme für den Stator und eine Rotorhalterung für den Rotor aufweisen. Vorzugsweise umgibt das Gehäuse, bis auf Öffnungen für unvermahlenes Mahlgut an der Eingangsseite und vermahlenes Mahlgut an der Ausgangsseite, den Rotor und den Stator allseitig und/oder vollständig. An der Ausgangsseite des Mahlwerks kann das Gehäuse ein Gehäuseoberteil mit Öffnungen aufweisen, durch welche das vermahlene Mahlgut aus dem Mahlwerk gelangt.

In einer bevorzugten Ausführungsform kann vorgesehen sein, dass das Blockierelement als Verbindungssteg ausgebildet ist, welcher zumindest zwei insbesondere gegenüberliegende Stellen des Gehäuses miteinander verbindet. Durch die zumindest zweimalige Verbindung mit dem Gehäuse erlangt das Blockierelement eine erhöhte Stabilität. Natürlich kann das als Verbindungssteg ausgebildete Blockierelement auch an mehr als zwei Stellen mit dem Gehäuse verbunden sein. Beispielsweise kann der Verbindungssteg sternförmig ausgebildet sein, wobei die Enden mit dem Gehäuse verbunden sind. Bevorzugt verbindet der Verbindungssteg aber lediglich zwei gegenüberliegende Seiten des Gehäuses.

Um den Rotor besser bei Verschiebungen zu stützen, kann vorgesehen sein, dass das Blockierelement zur Auflage einer Oberseite des Rotors ein vorzugsweise im Wesentlichen rundes, insbesondere kreisrundes, Auflageelement aufweist, welches bevorzugt ein Durchgangsloch besitzt. Die Oberseite des Rotors ist dabei die der Eingangsseite des Mahlwerks zugewandte Seite des Rotors. Wenn der Rotor kegelstumpfförmig ausgebildet ist, ist die Oberseite des Rotors die Deckfläche des Kegelstumpfes mit der geringeren Größe. Das Auflageelement ist dazu eingerichtet, die Oberseite des Rotors zu stützen bzw. zu blockieren. Falls ein Durchgangsloch in dem Auflageelement vorgesehen ist, erleichtert dieses die Montage des Rotors und hat überdies den Vorteil, dass sich weniger oder gar kein Mahlgut zwischen dem Rotor und dem Blockierelement verkeilt. Dadurch wird Abrieb, insbesondere Abrieb des Blockierelements verhindert.

Um die Handhabung des Mahlwerks zu erleichtern, weist das Gehäuse ein feststehendes Statorgehäuseteil, welches mit dem Stator drehfest verbunden ist, und ein gegenüber dem Statorgehäuseteil verdrehbares Rotorgehäuseteil, welches über ein Verbindungselement mit dem Rotor drehfest verbunden ist, wobei das Verbindungselement zumindest teilweise in einer Ausnehmung des Rotors aufgenommen ist. Das Gehäuse besteht demnach aus zwei Teilen, welches relativ zueinander verdrehbar sind. Der Stator kann dabei drehfest in eine Aufnahme des Statorgehäuseteil aufgenommen sein. Um eine drehfeste Verbindung zwischen Stator und Statorgehäuseteil zu gewährleisten, kann der Stator zumindest einen, bevorzugt zwei, Befestigungsabschnitt/-e aufweisen, mit welchen (jeweils) ein Befestigungselement des Statorgehäuseteils verbunden ist/sind. Als Befestigungselement kann ein Zapfen vorgesehen sein, welcher an einer Stirnseite der Aufnahme des Statorgehäuseteils angeordnet ist. Der Befestigungsabschnitt kann als Befestigungsausnehmung ausgebildet sein, in welche das Befestigungselement aufgenommen ist. Das Verbindungselement, welches in die Ausnehmung des Rotors eingefügt ist, ist bevorzugt einstückig mit dem Rotorgehäuseteil hergestellt. Das Verbindungselement kann als Stift ausgebildet sein, dessen Querschnittsform vorzugsweise von der Kreisform abweicht. Die Art der Verbindung des Verbindungselements mit dem Rotor ist reibschlüssig. Die oben erwähnte Rotorhalterung wird hier durch das Verbindungselement gebildet.

Wie erwähnt, können, wenn einzelne Bauteile des Mahlwerks, wie etwa der Rotor, aus einem keramischen oder metallischen Material besteht, größeren Fertigungsschwankungen unterliegen. Die Verbindungselemente, welche üblicherweise aus einem Kunststoff hergestellt werden, können hingegen exakter gefertigt werden und unterliegen deshalb deutlich geringeren Fertigungsschwankungen. Es kann daher, wenn bei der Herstellung die Ausnehmung eines Rotors aus keramischem/metallischem Material zu groß geraten ist, vorkommen, dass sich der Rotor im Laufe der Zeit von dem Verbindungselement löst und in Richtung der Eingangsseite des Mahlwerks verschiebt. Dadurch kann der Mahlspalt so stark verkleinert werden, dass der Mahldurchsatz reduziert oder das Mahlwerk sogar gänzlich unbrauchbar wird. Durch das erfindungsgemäße Blockierelement kann insbesondere dieser Problematik abgeholfen werden.

Der Statorgehäuseteil und der Rotorgehäuseteil können über eine Rastverbindung drehbar miteinander verbunden sein. Zu diesem Zweck können der Statorgehäuseteil und/oder der Rotorgehäuseteil über entsprechende Rastzapfen verfügen. Bevorzugt ist jedoch vorgesehen, dass eines der Gehäuseteile, insbesondere der Statorgehäuseteil, eine umlaufende Rastnut aufweist, in welche zumindest zwei Rastzapfen oder eine umlaufende Verdickung des anderen Gehäuseteils, insbesondere des Rotorgehäuseteils, eingreifen kann.

Um die Eingangsseite mit Mahlgut zu versorgen, kann vorgesehen sein, dass der Statorgehäuseteil einen Verbindungsabschnitt, insbesondere ein Gewinde, zur Verbindung mit einem Behälter aufweist. Der Verbindungsabschnitt befindet sich an der Eingangsseite des Mahlwerks. Alternativ zu dem Gewinde könnte auch eine Rastverbindung oder eine andere Art von Verbindung eingesetzt werden.

In einer Ausführungsform kann als Ausnehmung des Rotors ein Kanal mit vorzugsweise im Wesentlichen geradwandigen Innenflächen vorgesehen sein, welcher sich von einer Oberseite des Rotors zu einer Unterseite des Rotors erstreckt. Geradwandig bedeutet in diesem Zusammenhang, dass keine Verjüngung des Kanals zwischen Ober- und Unterseite des Rotors stattfindet. Auch ein abschnittsweise im Querschnitt gekrümmter Kanal fällt somit unter den Begriff geradwandig. Vorzugsweise ist der Kanal frei von Einbuchtungen, wobei unter Einbuchtungen Ausnehmungen und Öffnungen zu verstehen sind, die eine Rastverbindung zwischen Verbindungselement und Kanal ermöglichen würden.

Bevorzugt ist vorgesehen, dass das Blockierelement mit dem Statorgehäuseteil verbunden ist. Dadurch wird die Herstellung des Mahlwerks erleichtert.

Um den Rotor mit dem Rotorgehäuseteil im Wesentlichen drehfest zu verbinden, ist es günstig, wenn das Verbindungselement einen von einer Kreisform abweichenden Querschnitt, insbesondere einen vieleckigen, vorzugsweise einen 4-eckigen Querschnitt, aufweist.

Die Ausnehmung im Rotor kann zweckmäßigerweise einen dem Querschnitt des Verbindungselements im Wesentlichen entsprechenden Querschnitt, insbesondere einen vieleckigen, vorzugsweise einen 4-eckigen Querschnitt, aufweisen. Mit anderen Worten sind der Querschnitt der Ausnehmung und der Querschnitt des Verbindungselements vorzugsweise im Wesentlichen ident.

Um den Rotor am Verbindungselement zu befestigen, kann das Verbindungselement zumindest einen Vorsprung aufweisen, welcher in der Ausnehmung an einer Innenseite des Rotors anliegt und eine reibschlüssige Verbindung zwischen dem Rotor und dem Verbindungselement herstellt. Die Innenseite des Rotors wird durch die Wände der Ausnehmung gebildet. Im Falle eines Kanals als Ausnehmung wird die Innenseite des Rotors durch die Innenfläche des Kanals gebildet. Der Vorsprung übt, vom Verbindungselement aus betrachtet, eine radial nach außen wirkende Kraft auf die Innenseite des Rotors aus, sodass eine reib- bzw. kraftschlüssige Verbindung entsteht. Bevorzugt sind zwei insbesondere an gegenüberliegenden Seiten des Verbindungselements angebrachte Vorsprünge vorgesehen.

Um das Einführen des Verbindungselements in den Rotor zu erleichtern, ist es günstig, wenn der Vorsprung elastisch verformbar ist und zum Zwecke der reibschlüssigen Verbindung verbogen ist, sodass eine Kraft auf die Innenseite des Rotors ausgeübt wird. Der Vorsprung wird dabei durch das Einführen des Verbindungselements in die Ausnehmung des Rotors verbogen. Durch die Elastizität übt der Vorsprung eine (Reib-)Kraft auf die Innenseite des Rotors aus.

In einer bevorzugten Ausführungsform kann vorgesehen sein, dass der Rotor und der Stator aus einem Keramik- oder Metallmaterial bestehen. Keramik und Metall weisen den Vorteil auf, dass beim Mahlen kaum ein Abrieb entsteht, der zusammen mit dem Mahlgut in Speisen gelangen könnte.

Die Erfindung betrifft auch eine Gewürzmühle mit einem Aufnahmeraum, insbesondere Aufnahmebehälter, für Gewürze, dadurch gekennzeichnet, dass die Gewürzmühle ein Mahlwerk der beschriebenen Art aufweist und das Mahlwerk mit dem Aufnahmeraum verbunden ist. Der Aufnahmeraum kann insbesondere aus Glas oder Kunststoff bestehen. Zur Verbindung können insbesondere ein Gewinde oder eine Rastverbindung vorgesehen sein. Hinsichtlich der Merkmale und Vorteile wird auf die Beschreibung im Zusammenhang mit dem Mahlwerk verwiesen.

Nachstehend werden bevorzugte Ausführungsformen der Erfindung an Hand von Figuren näher beschrieben, auf die sie jedoch nicht beschränkt sein soll.
Fig. 1 zeigt das erfindungsgemäße Mahlwerk in einer Querschnittsdarstellung.
Fig. 2 zeigt das erfindungsgemäße Mahlwerk in einer Schrägansicht von oben.
Fig. 3 zeigt das erfindungsgemäße Mahlwerk in einer Explosionsdarstellung.
Fig. 4 zeigt eine erfindungsgemäße Gewürzmühle mit dem erfindungsgemäßen Mahlwerk.

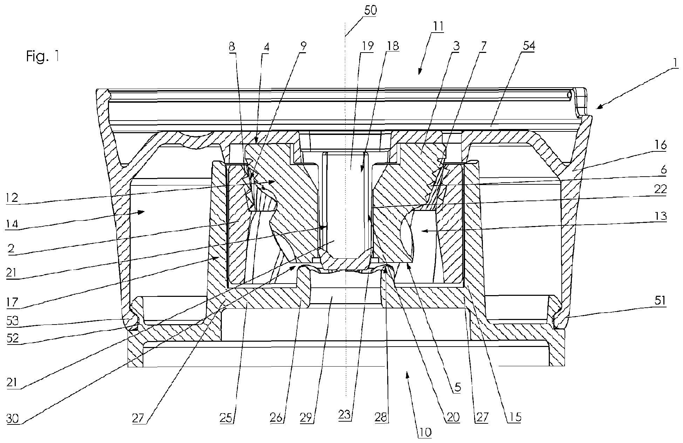

Fig. 1 zeigt das erfindungsgemäße Mahlwerk 1 ein einer Querschnittsdarstellung im zusammengesetzten Zustand. Das Mahlwerk 1 besitzt einen Stator 2 und einen in den Stator 2 aufgenommenen Rotor 3. Sowohl der Rotor 3, als auch der Stator 2 bestehen in der gezeigten Darstellung aus einem Keramikmaterial. Der Stator 2 ist als Ring ausgeführt, der den Rotor 3 vollständig umläuft. Der Rotor 3 besitzt eine Kegelstumpfform und läuft von einer Unterseite 4 zu einer Oberseite 5 hin konisch zusammen. Der Rotor 3 besitzt auf seiner Mantelfläche 6 eine Vielzahl an Mahlvorsprüngen 7, die mit Mahlvorsprüngen 8 des Stators 2 zusammenwirken, um ein Mahlgut (nicht gezeigt) zu zerkleinern. Die Mahlvorsprünge 8 des Stators 2 und die Mahlvorsprünge 7 des Rotors 3 sind schraublinienförmig um eine Längsachse 50 des Mahlwerks 1 verdreht, um die Führung des Mahlguts zu erleichtern. Zwischen dem Rotor 3 und dem Stator 2 befindet sich ein Mahlspalt 9, der sich von einer Eingangsseite 10, an der das unvermahlene Mahlgut zugeführt wird, zu einer Ausgangsseite 11, an der das gemahlene Mahlgut das Mahlwerk 1 wieder verlässt, verengt. Der Stator 2 und der Rotor 3 besitzen jeweils zwei unterschiedliche Bereiche, in denen die Mahlvorsprünge 7 und 8 verschieden ausgebildet sind. In einem unteren, zur Ausgangsseite 11 hin zugewandten Bereich 12 sind die Mahlvorsprünge 7 und 8 feiner und spitzer ausgebildet als in einem oberen, zur Eingangsseite 10 hin zugewandten Bereich 13. Auch die Anzahl der Mahlvorsprünge 7 und 8 ist in dem unteren Bereich 12 höher als in dem oberen Bereich 13. Die Oberseite 5 des Rotors 3 ist der Eingangsseite 10 zugewandt.

Wie in Fig. 1 ersichtlich, sind der Stator 2 und der Rotor 3 von einem Gehäuse 14 umgeben. Das Gehäuse 14 besitzt ein Statorgehäuseteil 15 und ein Rotorgehäuseteil 16, wobei das Rotorgehäuseteil 16 gegenüber dem Statorgehäuseteil 15 drehbar ist. Das Statorgehäuseteil 15 ist mit dem Rotorgehäuseteil 16 über eine Rastverbindung 51 verbunden. In Fig. 1 ist erkennbar, dass der Statorgehäuseteil 15 hierzu eine umlaufende, vorzugsweise nach außen zeigende Rastnut 52 aufweist, in welche eine umlaufende, vorzugsweise nach innen weisende Verdickung 53 des Rotorgehäuseteils 16 eingreift. Natürlich kann auch vorgesehen sein, dass der Rotorgehäuseteil 16 die Rastnut 52 und der Statorgehäuseteil 15 die Verdickung 53 aufweist. Das Rotorgehäuseteil 16 kann an der Ausgangsseite 11 eine Gehäuseoberteil 54 mit Öffnungen (nicht gezeigt) aufweisen, durch welche das gemahlene Mahlgut durchtreten kann.

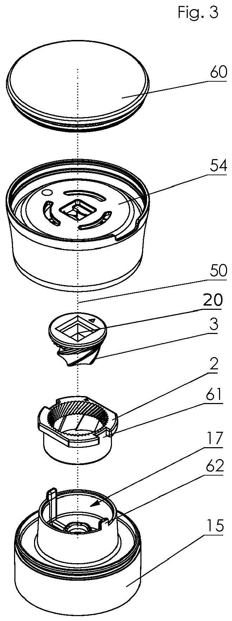

Das Statorgehäuseteil 15 ist im Wesentlichen drehfest mit dem Stator 2 verbunden. Zu diesem Zweck bildet das Statorgehäuseteil 15 eine vorzugsweise zylindermantelförmige Aufnahme 17 aus, in welche der Stator 2 im Wesentlichen drehfest aufgenommen ist. Zusätzlich kann der Stator 2 zumindest eine Befestigungsausnehmung 61 aufweisen, in welche ein Zapfen 62 des Statorgehäuseteils 15 aufgenommen ist (vgl. Fig. 3). Das Rotorgehäuseteil 16 weist eine Rotorhalterung 18 in Form eines Verbindungselements 19 auf, welches in eine Ausnehmung 20 des Rotors eingefügt ist. Das Verbindungselement 19 kann als Stift ausgebildet sein. Das Verbindungselement 19 kann mit dem Gehäuseoberteil 54 verbunden sein. Die Ausnehmung 20 wird in den Figuren durch einen Kanal 21 mit geradwandigen Innenflächen 22 gebildet, welcher von der Oberseite 5 zur Unterseite 4 durch den Rotor 3 verläuft und von beiden Seiten (Ober- 5 und Unterseite 4) zugänglich ist. Das Verbindungselement 19 durchdringt den gesamten Kanal 21. Um den Rotor 3 im Wesentlichen drehfest mit dem Rotorgehäuseteil 16 zu verbinden, weisen das Verbindungselement 19 und die Ausnehmung 20 im Wesentlichen den gleichen Querschnitt auf, welcher bevorzugt von der Kreisform abweicht. Durch den dabei entstehenden Formschluss wird bei einer Drehung des Rotorgehäuseteils 16 auch der Rotor 3 in Drehung versetzt. In der gezeigten Ausführungsform ist ein viereckiger Querschnitt des Verbindungselements 19 und der Ausnehmung 20 vorgesehen. Zusätzlich kann das Verbindungselement 19 zumindest einen Vorsprung 23 aufweisen, der elastisch verformbar ist und durch die Verformung eine radial nach außen wirkende Kraft auf die Innenfläche 22 des Kanals 21, d.h. eine Innenseite des Rotors 3, ausübt, sodass ein Reibschluss zwischen dem Verbindungselement 19 und dem Rotor 3 entsteht.

Keramikbauteile wie der Stator 2 oder der Rotor 3 unterliegen hinsichtlich ihrer Abmessungen mitunter nicht zu vernachlässigenden Fertigungsschwankungen. Aus diesem Grund kann es vorkommen, dass der Rotor 3 sich von dem Verbindungselement 19 löst und in Richtung der Eingangsseite 10 verschiebt, wodurch sich die Mahlvorsprünge 7 des Rotors 3 mit den Mahlvorsprüngen 8 des Stators 2 verkeilen können, sodass das Mahlwerk 1 nicht mehr weiter verwendet werden kann. Um dies zu verhindern, ist erfindungsgemäß ein Blockierelement 25 vorgesehen, welches eine (zu tiefe) Verschiebung des Rotors 3 in den Stator 2 blockiert. Das Blockierelement 25 ist in der gezeigten Darstellung als gerader Verbindungssteg 26 ausgebildet, der zwei gegenüberliegende Stellen 27 des Gehäuses 14, insbesondere des Statorgehäuseteils 15, miteinander verbindet. Das Blockierelement 25 ist mit dem Statorgehäuseteil 15 verbunden und bevorzugt unterhalb der Aufnahme 17 für den Stator 2 angeordnet. Zentral oberhalb des Rotors 3 ist bildet das Blockierelement 25 eine Auflagefläche 28 mit einem darin befindlichen Durchgangsloch 29 aus. Die Auflagefläche ist im Vergleich zum restlichen Blockierelement 25 in Richtung des Rotors 3 erhaben.

Zwischen dem Blockierelement 25 und der Oberseite 5 des Rotors 3 befindet sich in der gezeigten Darstellungsform ein Spiel 30. Dieses Spiel 30 beträgt vorzugsweise weniger als 2 mm, insbesondere weniger als 1 mm, besonders bevorzugt weniger als 0,5 mm. Der Rotor 3 in der gezeigten Darstellungsform berührt das Blockierelement 25 demnach nicht. Dass der Rotor 3 das Blockierelement 25 in der gezeigten Darstellung nicht berührt, ist darauf zurückzuführen, dass der Rotor durch den Reibschluss mit dem Vorsprung 23 an der vorgesehenen Stelle gehalten wird. Im Langzeitbetrieb (oder eben durch Fertigungsschwankungen) könnte es jedoch passieren, dass sich der Rotor 3 in Richtung der Eingangsseite 10 verschiebt. Ohne Blockierelement 25 würde sich der Rotor 3 mit dem Stator 2 verkeilen, sodass das Mahlwerk 1 nicht oder nur mehr eingeschränkt nutzbar wäre. Eine zu weite Verschiebung des Rotors 3 wird jedoch durch das Blockierelement 25 verhindert, sodass das Mahlwerk 1 auch langfristig verwendbar bleibt.

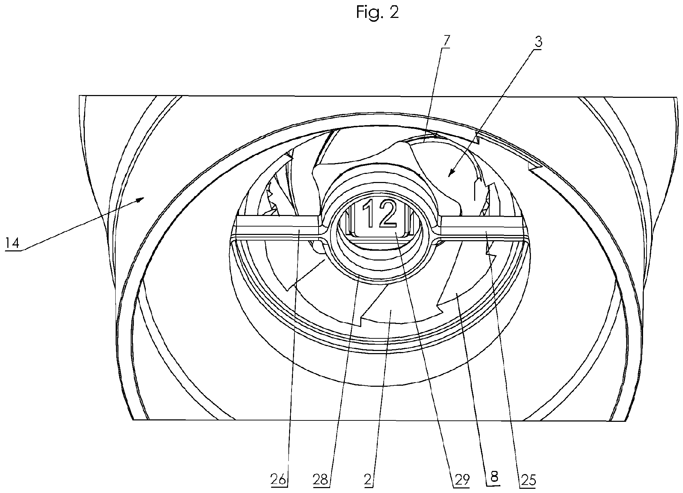

Fig. 2 zeigt das Mahlwerk in einer Schrägansicht von oben. In dieser Darstellung ist das Durchgangsloch 29 in dem Auflageelement 28 deutlich erkennbar.

Fig. 3 zeigt eine Explosionsdarstellung des erfindungsgemäßen Mahlwerks 1, wobei die einzelnen Teile entlang der Längsachse 50 gezeichnet sind.

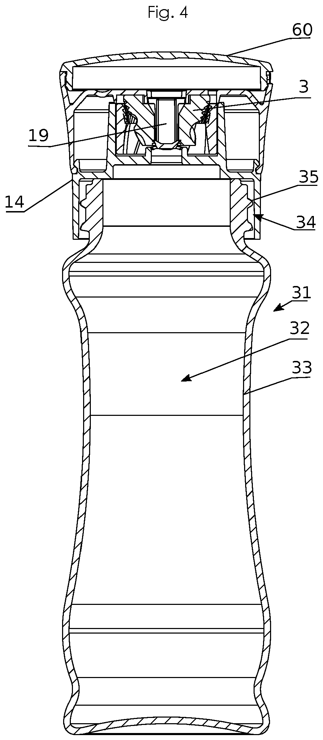

Fig. 4 zeigt eine Gewürzmühle 31 mit dem erfindungsgemäßen Mahlwerk 1 und einem Aufnahmeraum 32 für Gewürze in Form eines Aufnahmebehälters 33. Des Weiteren ist eine abnehmbare Kappe 60 ersichtlich. Zur Verbindung mit dem Aufnahmebehälter 33 weist das Gehäuse 14 einen Verbindungsabschnitt 34, insbesondere ein Gewinde 35, am Statorgehäuseteil 15 auf.

## Patentansprüche

1. Mahlwerk (1) für eine Gewürzmühle (31), insbesondere eine handbetriebene Gewürzmühle (31), mit einer Eingangsseite (10) für den Eintritt von ungemahlenem Mahlgut und einer Ausgangsseite (11) für den Austritt von gemahlenem Mahlgut, aufweisend:
- einen Rotor (3),
- einen mit dem Rotor (3) zusammenwirkenden Stator (2) und
- ein den Rotor (3) und/oder den Stator (2) zumindest teilweise umgebendes Gehäuse (14), wobei das Gehäuse (14) ein Statorgehäuseteil (15), welches mit dem Stator (2) im Wesentlichen drehfest verbunden ist, und ein gegenüber dem Statorgehäuseteil (15) verdrehbares Rotorgehäuseteil (16), welches über ein Verbindungselement (19) mit dem Rotor (3) im Wesentlichen drehfest verbunden ist, aufweist, wobei das Verbindungselement (19) zumindest teilweise in einer Ausnehmung (20) des Rotors (3) aufgenommen ist, **dadurch gekennzeichnet, dass** das Verbindungselement (19) und der Rotor (3) reibschlüssig verbunden sind und im Fall von Fertigungsschwankungen der Rotor (3) vom Verbindungselement (19) lösbar und in Richtung der Eingangsseite (10) verschiebbar ist, wobei das Gehäuse (14) an einer der Eingangsseite (10) zugewandten Seite des Rotors (3) ein Blockierelement (25) aufweist, welches eine Verschiebung des Rotors (3) in Richtung der Eingangsseite (10) blockiert.

2. Mahlwerk (1) nach Anspruch 1, **dadurch gekennzeichnet, dass** das Blockierelement (25) als Verbindungssteg (26) ausgebildet ist, welcher zumindest zwei insbesondere gegenüberliegende Stellen (27) des Gehäuses (14) miteinander verbindet.

3. Mahlwerk (1) nach Anspruch 1 oder 2, **dadurch gekennzeichnet, dass** das Blockierelement (25) zur Auflage einer Oberseite (5) des Rotors (3) ein vorzugsweise im Wesentlichen rundes, insbesondere kreisrundes, Auflageelement (28) aufweist, welches bevorzugt ein Durchgangsloch (29) besitzt.

4. Mahlwerk (1) nach einem der Ansprüche 1 bis 3, **dadurch gekennzeichnet, dass** der Statorgehäuseteil (15) und der Rotorgehäuseteil (16) über eine Rastverbindung drehbar miteinander verbunden sind.

5. Mahlwerk (1) nach einem der Ansprüche 1 bis 4, **dadurch gekennzeichnet, dass** der Statorgehäuseteil (15) einen Verbindungsabschnitt (34), insbesondere ein Gewinde (35), zur Verbindung mit einem Aufnahmebehälter (33) aufweist.

6. Mahlwerk (1) nach einem der Ansprüche 1 bis 5, **dadurch gekennzeichnet, dass** die Ausnehmung (20) des Rotors als Kanal (21) mit vorzugsweise im Wesentlichen geradwandigen Innenflächen (22) ausgebildet ist, welcher sich von einer Oberseite (5) des Rotors (3) zu einer Unterseite (4) des Rotors (3) erstreckt.

7. Mahlwerk (1) nach einem der Ansprüche 1 bis 6, **dadurch gekennzeichnet, dass** das Blockierelement (25) mit dem Statorgehäuseteil (15) verbunden ist.

8. Mahlwerk (1) nach einem der Ansprüche 1 bis 7, **dadurch gekennzeichnet, dass** das Verbindungselement (19) einen von einer Kreisform abweichenden Querschnitt, insbesondere einen vieleckigen, vorzugsweise einen 4-eckigen Querschnitt, aufweist.

9. Mahlwerk (1) nach einem der Ansprüche 1 bis 8, **dadurch gekennzeichnet, dass** die Ausnehmung (20) im Rotor (3) einen dem Querschnitt des Verbindungselements (19) im Wesentlichen entsprechenden Querschnitt, insbesondere einen vieleckigen, vorzugsweise einen 4-eckigen Querschnitt, aufweist.

10. Mahlwerk (1) nach einem der Ansprüche 1 bis 9, **dadurch gekennzeichnet, dass** der Stator (2) drehfest in einer Aufnahme (17) im Statorgehäuseteil (15) aufgenommen ist.

11. Mahlwerk (1) nach einem der Ansprüche 1 bis 10, **dadurch gekennzeichnet, dass** das Verbindungselement (19) zumindest einen Vorsprung (23) aufweist, welcher in der Ausnehmung (20) des Rotors (3) an einer Innenseite des Rotors (3) anliegt und eine reibschlüssige Verbindung zwischen dem Rotor (3) und dem Verbindungselement (19) herstellt.

12. Mahlwerk (1) nach Anspruch 11, **dadurch gekennzeichnet, dass** der Vorsprung (23) elastisch verformbar ist und zum Zwecke der reibschlüssigen Verbindung verbogen ist, sodass eine Kraft auf die Innenseite des Rotors (3) ausgeübt wird.

13. Mahlwerk (1) nach einem der Ansprüche 1 bis 12, **dadurch gekennzeichnet, dass** der Rotor (3) und der Stator (2) aus einem Keramikmaterial, insbesondere einem Keramikmaterial mit einem Alumina-Anteil, welcher vorzugsweise mindestens 85 % beträgt, und/oder einem Metall besteht.

14. Gewürzmühle (31) mit einem Aufnahmeraum (32), insbesondere Aufnahmebehälter (33), für Gewürze, **dadurch gekennzeichnet, dass** die Gewürzmühle (31) ein Mahlwerk (1) nach einem der vorhergehenden Ansprüche aufweist und das Mahlwerk (1) mit dem Aufnahmeraum (32) verbunden ist.

## Claims

1. Grinder (1) for a spice mill (31), in particular a manually-operated spice mill (31), with an inlet side (10) for the entry of unground grinding stock and an outlet side (11) for the exit of ground grinding stock, comprising:
- a rotor (3),
- a stator (2), interacting with the rotor (3), and
- a housing (14), at least partially surrounding the rotor (3) and/or the stator (2), wherein
the housing (14) has a stator housing part (15), which is connected to the stator (2) in an essentially rotationally fixed manner, and a rotor housing part (16), which can be rotated relative to the stator housing part (15), and is connected to the rotor (3) in an essentially rotationally fixed manner by way of a connecting element (19), wherein
the connecting element (19) is at least partially accommodated in a recess (20) of the rotor (3),
**characterised in that**,
the connecting element (19) and the rotor (3) are frictionally connected, and in the event of manufacturing variations the rotor (3) can be detached from the connecting element (19) and can be displaced in the direction of the inlet side (10), wherein
the housing (14) has, on a side of the rotor (3) facing towards the inlet side (10), a blocking element (25), which blocks a displacement of the rotor (3) in the direction of the inlet side (10).

2. Grinder (1) according to Claim 1,
**characterised in that**,
the blocking element (25) is designed as a connecting web (26), which connects at least two, in particular oppositely located, points (27) of the housing (14) to one another.

3. Grinder (1) according to Claim 1 or 2,
**characterised in that**,
the blocking element (25), for the support of an upper face (5) of the rotor (3), has a preferably essentially round, in particular circular, supporting element (28), which preferably has a through-passage hole (29).

4. Grinder (1) according to one of the Claims 1 to 3,
**characterised in that**,
the stator housing part (15) and the rotor housing part (16) are rotatably connected to each other by way of a latching connection.

5. Grinder (1) according to one of the Claims 1 to 4, **characterised in that**,
the stator housing part (15) has a connecting section (34), in particular a threaded section (35), for connection to an accommodating container (33).

6. Grinder (1) according to one of the Claims 1 to 5, **characterised in that**,
the recess (20) of the rotor is designed as a channel (21), preferably with essentially straight-walled inner surfaces (22), which channel (21) extends from an upper face (5) of the rotor (3) to a lower face (4) of the rotor (3).

7. Grinder (1) according to one of the Claims 1 to 6, **characterised in that**,
the blocking element (25) is connected to the stator housing part (15) .

8. Grinder (1) according to one of the Claims 1 to 7, **characterised in that**,
the connecting element (19) has a cross-section deviating from a circular shape, in particular it has a polygonal, preferably a quadrilateral, cross-section.

9. Grinder (1) according to one of the Claims 1 to 8, **characterised in that**,
the recess (20) in the rotor (3) has a cross-section essentially corresponding to the cross-section of the connecting element (19), in particular it has a polygonal, preferably a quadrilateral, cross-section.

10. Grinder (1) according to one of the Claims 1 to 9, **characterised in that**,
the stator (2) is accommodated in a rotationally fixed manner in an accommodation element (17) in the stator housing part (15).

11. Grinder (1) according to one of the Claims 1 to 10, **characterised in that**,
the connecting element (19) has at least one projection (23) which lies in the recess (20) of the rotor (3) on an inner face of the rotor (3), and establishes a frictional connection between the rotor (3) and the connecting element (19).

12. Grinder (1) according to Claim 11,
**characterised in that**,
the projection (23) is elastically deformable, and is bent for the purpose of frictional connection, such that a force is exerted on the inner face of the rotor (3).

13. Grinder (1) according to one of the Claims 1 to 12, **characterised in that**,
the rotor (3) and the stator (2) are made of a ceramic material, in particular a ceramic material with an alumina content which is preferably at least 85%, and/or a metal.

14. Spice mill (31) with an accommodating chamber (32), in particular an accommodating container (33), for spices,
**characterised in that**,
the spice mill (31) has a grinder (1) according to one of the preceding claims, and the grinder (1) is connected to the accommodating chamber (32).

## Revendications

1. Broyeur (1) pour un moulin à épices (31), en particulier un moulin à épices actionné manuellement (31), avec un côté d'entrée (10) pour l'entrée de produit à broyer non broyé et un côté de sortie (11) pour la sortie de produit à broyer broyé, comportant:
- un rotor (3),
- un stator (2) coopérant avec le rotor (3) et
- un boîtier (14) entourant au moins partiellement le rotor (3) et/ou le stator (2), où le boîtier (14) comporte une partie de boîtier de stator (15), qui est reliée avec le stator (2) de manière sensiblement solidaire en rotation, et une partie de boîtier de rotor (16) pouvant tourner par rapport à la partie de boîtier de stator (15), qui est reliée au rotor (3) de manière sensiblement solidaire en rotation par le biais d'un élément de liaison (19), où l'élément de liaison (19) est logé au moins partiellement dans un évidement (20) du rotor (3), **caractérisé en ce que** l'élément de liaison (19) et le rotor (3) sont reliés par friction et dans le cas de fluctuations de fabrication le rotor (3) peut être séparé de l'élément de liaison (19) et est déplaçable en direction du côté d'entrée (10), où le boîtier (14) comporte d'un côté du rotor (3) tourné vers le côté d'entrée (10) un élément de blocage (25) qui bloque un déplacement du rotor (3) en direction du côté d'entrée (10).

2. Broyeur (1) selon la revendication 1, **caractérisé en ce que** l'élément de blocage (25) est conçu sous forme d'une traverse de liaison (26) qui relie entre eux au moins deux emplacements (27) du boîtier (14), en particulier situés l'un en face de l'autre.

3. Broyeur (1) selon la revendication 1 ou 2, **caractérisé en ce que** l'élément de blocage (25) comporte pour l'appui d'un côté supérieur (5) du rotor (3) un élément d'appui (28) de préférence sensiblement rond, en particulier circulaire, qui possède de préférence un trou traversant (29).

4. Broyeur (1) selon l'une des revendications 1 à 3, **caractérisé en ce que** la partie de boîtier de stator (15) et la partie de boîtier de rotor (16) sont reliées l'une à l'autre de manière à pouvoir tourner par le biais d'une liaison à encliquetage.

5. Broyeur (1) selon l'une des revendications 1 à 4, caractérisé en que la partie de boîtier de stator (15) comporte une section de liaison (34), en particulier un filetage (35), pour la liaison avec un récipient de logement (33).

6. Broyeur (1) selon l'une des revendications 1 à 5, **caractérisé en ce que** l'évidement (20) du rotor est conçu sous la forme d'un canal (21) avec de préférence des surfaces intérieures à parois sensiblement droites (22), qui s'étend d'un côté supérieur (5) du rotor (3) à un côté inférieur (4) du rotor (3).

7. Broyeur (1) selon l'une des revendications 1 à 6, **caractérisé en ce que** l'élément de blocage (25) est relié à la partie de boîtier de stator (15).

8. Broyeur (1) selon l'une des revendications 1 à 7, **caractérisé en ce que** l'élément de liaison (19) comporte l'une d'une section transversale s'écartant d'un cercle, en particulier une section transversale polygonale, de préférence une section transversale à 4 angles.

9. Broyeur (1) selon l'une des revendications 1 à 8, **caractérisé en ce que** l'évidement (20) dans le rotor (3) comporte une section transversale correspondant sensiblement à la section transversale de l'élément de liaison (19), en particulier une section transversale polygonale, de préférence une section transversale à 4 angles.

10. Broyeur (1) selon l'une des revendications 1 à 9, **caractérisé en ce que** le stator (2) est logé de manière solidaire en rotation dans un logement (17) dans la partie de boîtier de stator (15).

11. Broyeur (1) selon l'une des revendications 1 à 10, **caractérisé en ce que** l'élément de liaison (19) comporte au moins une protubérance (23), qui s'appuie dans l'évidement (20) du rotor (3) sur un côté intérieur du rotor (3) et réalise une liaison par friction entre le rotor (3) et l'élément de liaison (19).

12. Broyeur (1) selon la revendication 11, **caractérisé en ce que** la protubérance (23) est élastiquement déformable et est courbée dans le but de la liaison par friction, de sorte qu'une force est exercée sur le côté intérieur du rotor (3).

13. Broyeur (1) selon l'une des revendications 1 à 12, **caractérisé en ce que** le rotor (3) et le stator (2) consistent en un matériau céramique, en particulier en un matériau céramique avec une proportion d'aluminium, qui est de préférence d'au moins 85 %, et/ou en un métal.

14. Moulin à épices (31) avec un espace de logement (32), en particulier un récipient de logement (33), pour des épices, **caractérisé en ce que** le moulin à épices (31) comporte un broyeur (1) selon l'une des revendications précédentes et le broyeur (1) est relié à l'espace de logement (32).
